# DEMANDE DE BREVET EUROPEEN

(11) **EP 3 671 499 A1**
(43) Date de publication de la demande: **24.06.2020**
(21) Numéro de dépôt: 19218108.9
(22) Date de dépôt: 19.12.2019
(51) Int. Cl.: G06F 21/30, H04L 9/32, H04L 29/06, H04W 12/06, B64D 45/00

(54) **PROCÉDÉ D'AUTHENTIFICATION D'UN ÉQUIPEMENT, DISPOSITIF D'ÉMISSION, DISPOSITIF DE RÉCEPTION, SYSTÈME DE COMMUNICATION ET AÉRONEF ASSOCIÉS**

(30) Priorité: 21.12.2018 FR 1873903
(71) Demandeur: Thales, 92400 Courbevoie (FR)
(72) Inventeur: MONNIER, Stéphane, 33700 CS50108 MERIGNAC (FR); GUIHARD, Vincent, 33700 CS50108 MERIGNAC (FR); PONCIN, Daniel, 33700 CS50108 MERIGNAC (FR)
(74) Mandataire: Lavoix

(57) **Abrégé**

L'invention concerne un procédé d'authentification d'un équipement (20, 22) par un système de communication (12), comprenant :
- une étape d'échange d'au moins une trame de données (30) entre un premier équipement (20) et un deuxième équipement (22) à travers un bus de communication (14) utilisant un protocole à commutation de paquets, la trame de données (30) comportant un préambule (34) et un corps de message (36),
- une étape de recherche dans chaque trame de données (30) échangées de la présence d'un marqueur dans le préambule (34), le marqueur étant spécifique du système de communication (12), et
- uniquement lorsque le marqueur a été trouvé par le deuxième équipement (22) dans une trame de données (30), une étape d'authentification du premier équipement (20).

## Description

La présente invention concerne un procédé d'authentification d'un équipement. La présente invention se rapporte également à un dispositif d'émission, un dispositif de réception, un système de communication ainsi qu'à un aéronef pouvant être impliqués dans la mise en oeuvre du procédé d'authentification.

Pour assurer la sécurité d'un système de communication, il convient de détecter des connexions d'équipements non autorisés.

Pour cela, dans les systèmes de communications non embarqués, il est connu de mettre en place des mécanismes complexes d'authentification garantissant la sécurité. La complexité de tels mécanismes n'est pas compatible avec des processus d'assurance qualité de conception de niveau élevée que l'on retrouve dans des systèmes embarqués critiques de l'aéronautique.

Aussi, dans de tels systèmes embarqués, il est uniquement surveillé et détecté les coupures de lien physique.

Toutefois, une telle détection ne permet pas de dissocier le redémarrage d'un équipement tiers avec une connexion d'un nouvel équipement. De plus, cela ne permet pas de détecter un équipement non légitime, quand ce dernier est connecté dès le démarrage du système.

Il existe donc un besoin pour un procédé d'authentification d'équipement par un système de communication qui procure une meilleure sécurité et qui soit compatible avec une application en système embarqué.

Pour cela, il est décrit un procédé d'authentification d'un équipement par un système de communication, le procédé comprenant une étape d'échange d'au moins une trame de données entre un premier équipement et un deuxième équipement à travers un bus de communication utilisant un protocole à commutation de paquets, la trame de données comportant un préambule et un corps de message, une étape de recherche dans chaque trame de données échangées de la présence d'un marqueur dans le préambule, le marqueur étant spécifique du système de communication, et uniquement lorsque le marqueur a été trouvé par le deuxième équipement dans une trame de données, une étape d'authentification du premier équipement.

Suivant des modes de réalisation particuliers, le procédé comprend une ou plusieurs des caractéristiques suivantes, prise(s) isolément ou suivant toutes les combinaisons techniquement possibles :
- lors de l'étape de recherche, le deuxième équipement détermine la taille du préambule et compare la taille déterminée à une taille prédéfinie, le deuxième équipement trouvant le marqueur si la taille déterminée diffère de la taille prédéfinie,
- la taille prédéfinie est obtenue par analyse d'une pluralité de trames de données échangées, la taille prédéfinie étant la taille des trames analysées la plus fréquente, et
- le préambule comporte des données de synchronisation et dans lequel, lors de l'étape de recherche, le deuxième équipement recherche la présence éventuelle de données dans le préambule ne faisant pas partie des données de synchronisation.

La présente description concerne aussi un dispositif d'émission d'une trame de données à travers un bus de communication utilisant un protocole à commutation de paquets, la trame de données comprenant un préambule, le dispositif d'émission étant propre à modifier le préambule.

La présente description se rapporte également à un dispositif de réception d'une trame de données émise à travers un bus de communication utilisant un protocole à commutation de paquets, la trame de données comprenant un préambule, le dispositif de réception étant propre à identifier un marqueur dans le préambule.

La présente description se rapporte également à un équipement comportant au moins un dispositif parmi un dispositif d'émission tel que précédemment décrit et un dispositif de réception tel que précédemment décrit.

La présente description porte aussi sur système de communication comportant un équipement tel que précédemment décrit et un bus de communication.

La présente description porte aussi sur aéronef comprenant un système de communication tel que précédemment décrit.

D'autres caractéristiques et avantages de l'invention apparaîtront à la lecture de la description qui suit, de modes de réalisation de l'invention donnée à titre d'exemple uniquement et en références aux dessins qui sont :
- [Fig 1] figure 1, une vue schématique d'un aéronef comportant des équipements, et
- [Fig 2] figure 2, une représentation schématique d'un exemple de trame de données échangée entre deux équipements de l'aéronef de la figure 1.

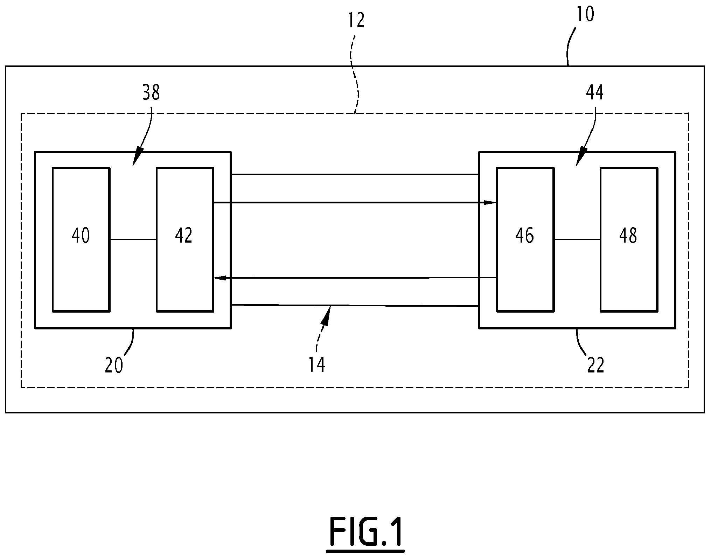

Un aéronef 10 est représenté sur la figure 1.

Un aéronef est un engin mobile piloté par au moins un pilote (pouvant être au sol), et apte à voler notamment dans l'atmosphère terrestre, tel qu'un avion, un drone ou un hélicoptère.

A titre d'illustration, il est supposé que l'aéronef 10 est un avion.

Selon l'exemple proposé, l'aéronef 10 comporte de multiples éléments embarqués parmi lesquels un système de communication 12.

Le système de communication 12 assure la communication entre les organes faisant partie du système de communication 12.

Le système de communication 12 est un système de communication utilisant un protocole à commutations de paquets.

En particulier, le protocole à commutation de paquets est un protocole Ethernet.

Plus précisément, le protocole du système de commutation est un protocole ayant les couches de bas niveaux (couche inférieure au niveau 3 selon le standard OSI) de la norme IEEE802.3, par exemple la partie 3 ou la partie 7 de la norme ARINC 664, ou encore la norme TSN.

Dans l'exemple de la figure 1, le système de communication 12 comporte un bus de communication 14, un premier équipement 20 et un deuxième équipement 22.

Un bus de communication 14 est un dispositif de transmission de données partagé entre plusieurs composants électroniques.

Dans le cas de la figure 1, le bus de communication 14 est propre à permettre l'échange de données entre les deux équipements 20 et 22.

Par exemple, un équipement est un calculateur avionique de mission communiquant avec un afficheur de paramètres de vol, ou encore un concentrateur de données communiquant avec un commutateur réseau avionique.

Plus généralement, par équipement dans ce contexte, il est entendu un appareil électronique propre à effectuer une fonction définie pour l'aéronef 10 et propre à communiquer avec les autres équipements à travers le bus de communication 14.

Le premier équipement 20 et le deuxième équipement 22 sont ainsi propres à s'échanger des trames de données à travers le bus de communication 14.

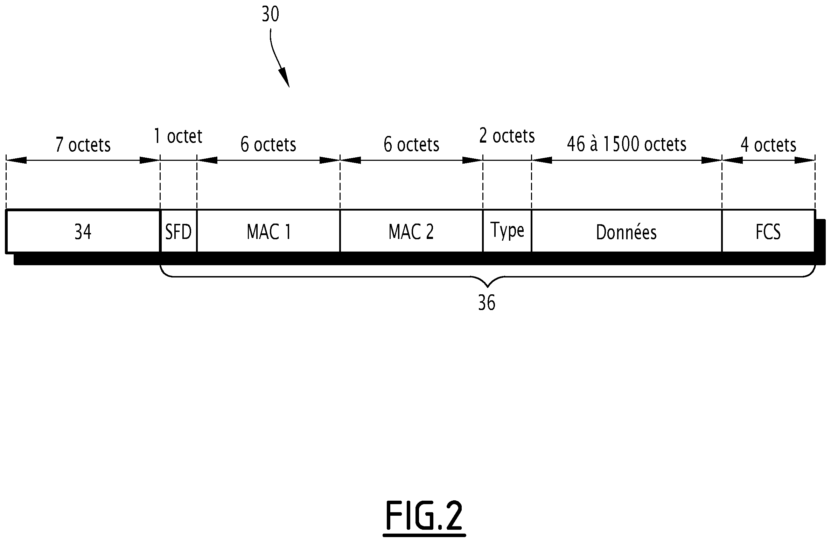

En particulier, les deux équipements 20 et 22 sont propres à échanger une trame de données 30 représentée sur la figure 2.

La trame de données 30 correspond à l'architecture imposée pour un protocole ayant les couches de bas niveaux de la norme IEEE802.3.

La trame de données 30 comporte deux parties successives : un préambule 34 suivi d'un corps de message 36.

Dans l'exemple spécifique de la trame de la figure 2, le préambule 34 comporte des données de synchronisation DS et des données d'identification DI.

Les données de synchronisation DS sont une série de bits.

Les données de synchronisation DS sont propres à assurer la synchronisation de l'équipement qui reçoit ladite trame.

Pour cela, les données de synchronisation DS prennent des valeurs prédéfinies. A titre d'illustration, chacun des octets des données de synchronisation prend la valeur 10101010.

Selon l'exemple décrit, le préambule 34 présente une taille de 7 octets.

En variante, la taille du préambule 34 varie entre 6 octet et 2 bits, et 7 octets et 6 bits.

Les données d'identification DI comportent des bits spécifiques du système de communication 12 et constituent un marqueur.

Il est à noter que la présence des données d'identification DI pour le préambule 34 est originale par rapport aux exigences de la norme IEEE802.3.

Le corps de message 36 comporte une pluralité de champs. Selon l'exemple de la figure 2, le corps de message 36 comprend six champs C1 à C6.

Le premier champ C1 est un champ délimiteur de début de trame. Le premier champ C1 est aussi désigné par le terme de champ SFD, le sigle SFD renvoyant au terme anglais de « Starting Frame Delimiter ».

Le premier champ C1 présente une taille d'un octet.

Le deuxième champ C2 est une adresse de destination.

L'adresse de destination est une adresse utilisée au niveau de la sous-couche de contrôle d'accès au support (aussi désigné par l'acronyme MAC renvoyant au terme anglais de « Media Access Control »).

Le deuxième champ C2 est aussi dénommé champ MAC 1.

Selon l'exemple illustré, le deuxième champ C2 présente une taille de 6 octets.

Le troisième champ C3 est l'adresse source, c'est-à-dire l'adresse de l'élément ayant émis la trame.

Comme pour le champ MAC1, l'adresse source est une adresse utilisée au niveau de la sous-couche MAC de sorte que le troisième champ C3 est aussi dénommé champ MAC2.

Le troisième champ C3 présente une taille de 6 octets.

Le quatrième champ C4 est un champ dit champ « Type ».

Le quatrième champ C4 sert à indiquer le protocole utilisé.

Le quatrième champ C4 occupe une taille de 2 octets.

Le cinquième champ C5 correspond au champ de données aussi appelée charge utile par référence au terme anglais de « payload ».

Selon les cas, la taille du cinquième champ C5 est comprise entre 46 octets et 1500 octets.

Le sixième champ C6 est le champ terminal.

Le sixième champ C6 est le champ FCS l'anglais « Frame Check Sequence » pour séquence de contrôle de trame.

Le sixième champ C6 s'étend sur 4 octets.

Selon l'exemple décrit, le premier équipement 20 comprend un dispositif d'émission 38.

Le dispositif d'émission 38 est réalisé sous forme de composants logiques programmables tel qu'un circuit FPGA (sigle renvoyant au terme anglais Field-Programmable Gâte Array signifiant circuit logique programmable), ou encore sous forme de circuits intégrés dédiés, tel qu'un circuit ASIC (acronyme renvoyant au terme anglais Application-Specific Integrated Circuit signifiant littéralement circuit intégré propre à une application).

Le dispositif d'émission 38 comporte un premier contrôleur 40 et un émetteur 42.

Le premier contrôleur 40 est propre à générer des trames de données à émettre.

Les trames générées par le premier contrôleur 40 sont similaires en termes de structure à la trame de données 30 de la figure 2.

Le premier contrôleur 40 est, en outre, propre à modifier le préambule 34 des trames générées.

En particulier, le premier contrôleur 40 est propre à modifier la valeur des données d'identification DI pour que les données d'identification DI comportent un marqueur. Le marqueur est alors une série de bits spécifique au système de communication 12.

Le premier contrôleur 40 est connecté à l'émetteur 42.

L'émetteur 42 est propre à émettre les trames générées par le premier contrôleur 40 à destination du deuxième équipement 22.

L'émetteur 42 émet les trames à travers le bus de communication 14 qui relie les deux équipements 20 et 22.

Le deuxième équipement 22 comporte un dispositif de réception 44.

Le dispositif de réception 44 peut être réalisé physiquement comme le dispositif d'émission 38, typiquement sous forme d'un circuit FPGA.

Le dispositif de réception 44 comporte un récepteur 46 et un deuxième contrôleur 48.

Le récepteur 46 est propre à recevoir des trames de données, et notamment une trame émise par le dispositif d'émission 38 du premier équipement 20.

Pour cela, le récepteur 46 est propre à se synchroniser à la réception de la trame de données 30 à la réception des données de synchronisation DS.

Le deuxième contrôleur 48 est propre à identifier un marqueur dans le préambule 34 d'une trame reçue par le récepteur 46.

Par ailleurs, dans l'exemple décrit, le dispositif d'émission 38 du premier équipement 20 et le dispositif de réception 44 du deuxième équipement 22 ont des rôles échangeables de sorte que le dispositif de réception 44 est propre à émettre une trame de données à destination du dispositif d'émission 38.

En particulier, cela signifie que le premier contrôleur 40 et le deuxième contrôleur 48 sont propres à effectuer les mêmes opérations et que l'émetteur 42 et le récepteur 46 sont des émetteurs-récepteurs.

Le fonctionnement du système de communication 12 est maintenant décrit en référence à un exemple de mise en œuvre d'un procédé d'authentification d'un équipement.

Le procédé d'authentification vise à authentifier un équipement.

Selon l'exemple illustré, il est supposé que le procédé d'authentification vise à authentifier le premier équipement 20 pour vérifier que le premier équipement 20 peut être accepté par le système de communication 12.

Le procédé comporte une étape d'échange, une étape de recherche et éventuellement une étape d'authentification.

Lors de l'étape d'échange, il est échangé une trame de données conforme à la figure 2 entre le premier équipement 20 et le deuxième équipement 22.

Selon l'exemple décrit, la trame de données comporte un marqueur spécifique du système de communication 12.

Plus précisément, le premier contrôleur 40 émet une trame de données comportant le marqueur. L'émetteur 42 émet la trame vers le récepteur 46 qui la reçoit.

Lors de l'étape de recherche, le deuxième contrôleur 48 cherche la présence d'un marqueur spécifique attendu dans la trame reçue par le récepteur 46.

Plus précisément, le deuxième contrôleur 48 cherche la présence éventuelle de données dans le préambule 34 ne faisant pas partie des données de synchronisation DS, correspondant à des données d'identification DI, et cherche la présence du marqueur dans les données d'identification DI.

Lors de l'étape d'authentification, le deuxième contrôleur 48 authentifie le premier équipement 20 uniquement si le marqueur spécifique a été trouvé par le deuxième contrôleur 48.

En échangeant le rôle du premier équipement 20 et du deuxième équipement 22, un procédé similaire peut être utilisé pour réaliser une authentification du deuxième équipement 22 par le premier équipement 20.

En résumé, les données d'identification DI permettent à un équipement récepteur d'authentifier un équipement émetteur, c'est-à-dire de vérifier l'identité de l'équipement émetteur de la trame de données 30, en identifiant un marqueur dans les données d'identification DI, le marqueur étant une série de bits spécifique au système de communication 12.

Le procédé est ainsi un procédé permettant d'authentifier la connexion d'un équipement 20 ou 22 sur le bus de communication 14 du système de communication 12 de manière simple et discrète vis-à-vis d'un observateur extérieur au bus de communication 12.

La simplicité de mise en œuvre du procédé découle notamment du fait qu'il suffit d'utiliser un circuit dédié comme dispositif d'émission ou de réception, ce qui rend le procédé compatible avec les contraintes de certification dans le domaine de l'aviation.

Le procédé est discret vis-à-vis d'un observateur extérieur dans la mesure où la modification apportée à la trame est mineure et où les outils les plus habituels de l'état de la technique n'utilisent le préambule que pour la synchronisation et ne le rendent pas visible à l'utilisateur.

Pour renforcer cette discrétion, il est avantageux que la modification des trames ne soit mise en œuvre que pour certaines trames et non toutes les trames émises par le premier équipement 20.

Dans l'exemple qui vient d'être illustré, le marqueur spécifique du système de communication 12 est un ensemble de bits spécifiques inclus dans le préambule 34.

Selon une variante, le marqueur est une variation de la taille du préambule 34.

La variation de taille est suffisamment faible pour respecter la norme IEEE802.3.

La variation de la taille du préambule 34 est obtenue par ajout de données dans le préambule 34.

Une telle variante utilise alors le fait que la norme IEEE802.3 admet une variation de la taille du préambule 34.

La variation de taille peut également être obtenue par suppression de données parmi les données de synchronisation DS en exploitant le fait que quelques octets suffisent à assurer la synchronisation, des octets du préambule 34 n'étant pas utilisés.

Dans un tel cas, lors de l'étape de recherche, le deuxième équipement 22 détermine la taille du préambule 34 et compare la taille déterminée à une taille prédéfinie, le deuxième équipement 22 trouvant le marqueur si la taille déterminée diffère de la taille prédéfinie.

Une manière de déterminer la taille prédéfinie est d'analyser une pluralité de trames de données échangées, la taille prédéfinie étant la taille des trames analysées la plus fréquente.

## Revendications

1. Procédé d'authentification d'un équipement (20, 22) par un système de communication (12), comprenant :
- une étape d'échange d'au moins une trame de données (30) entre un premier équipement (20) et un deuxième équipement (22) à travers un bus de communication (14) utilisant un protocole à commutation de paquets, la trame de données (30) comportant un préambule (34) et un corps de message (36),
- une étape de recherche dans chaque trame de données (30) échangées de la présence d'un marqueur dans le préambule (34), le marqueur étant spécifique du système de communication (12), et
- uniquement lorsque le marqueur a été trouvé par le deuxième équipement (22) dans une trame de données (30), une étape d'authentification du premier équipement (20).

2. Procédé selon la revendication 1, dans lequel, lors de l'étape de recherche, le deuxième équipement (22) détermine la taille du préambule (34) et compare la taille déterminée à une taille prédéfinie, le deuxième équipement (22) trouvant le marqueur si la taille déterminée diffère de la taille prédéfinie.

3. Procédé selon la revendication 2, dans lequel la taille prédéfinie est obtenue par analyse d'une pluralité de trames de données échangées, la taille prédéfinie étant la taille des trames analysées la plus fréquente.

4. Procédé d'authentification selon l'une quelconque des revendications 1 à 3, dans lequel, le préambule (34) comporte des données de synchronisation et dans lequel, lors de l'étape de recherche, le deuxième équipement (22) recherche la présence éventuelle de données dans le préambule (34) ne faisant pas partie des données de synchronisation.

5. Dispositif d'émission (40) d'une trame de données (30) à travers un bus de communication (14) utilisant un protocole à commutation de paquets, la trame de données (30) comprenant un préambule (34), le dispositif d'émission (40) étant propre à modifier le préambule (34).

6. Dispositif de réception (44) d'une trame de données (30) émise à travers un bus de communication (14) utilisant un protocole à commutation de paquets, la trame de données (30) comprenant un préambule (34), le dispositif de réception (44) étant propre à identifier un marqueur dans le préambule (34).

7. Equipement (20, 22) comportant au moins un dispositif parmi un dispositif d'émission (38) selon la revendication 5 et un dispositif de réception (44) selon la revendication 6.

8. Système de communication (12) comportant un équipement (20, 22) selon la revendication 7 et un bus de communication (14).

9. Aéronef (10) comprenant un système de communication (12) selon la revendication 8.
